# EUROPEAN PATENT APPLICATION

(11) **EP 4 545 250 A1**
(43) Date of publication of application: **30.04.2025**
(21) Application number: 23205111.0
(22) Date of filing: 23.10.2023
(51) Int. Cl.: B25B 21/00, B25B 21/02, B25B 23/147

(54) **ELECTRIC HAND TOOL WITH TORQUE SENSOR AND EXTERNAL FIELD COMPENSATION**

(71) Applicant: NCTE AG, 82041 Oberhaching (DE)
(72) Inventor: Uebbing, Jürgen, 80997 München (DE); Eckschlager, Florian, 85521 Riemerling (DE)
(74) Representative: Grünecker Patent- und Rechtsanwälte PartG mbB

(57) **Abstract**

The invention relates to an electric hand tool comprising a driving unit for driving a shaft of the electric hand tool and configured to drive, via the shaft, a socket of the electric hand tool or a socket connectable to the electric hand tool; a magnetostrictive torque sensor for measuring a torque applied to the shaft via the driving unit; wherein the magnetostrictive torque sensor comprises a magnetized torque-transmitting element and a 3D magnetic field sensor, wherein the 3D magnetic field sensor is configured for measuring a total magnetic field, the total magnetic field including the magnetic field generated by the magnetized portion of the shaft and an interfering external magnetic field; and a processor for at least partially correcting the total magnetic field for the interfering external magnetic field to obtain a corrected magnetic field corresponding to the magnetic field generated by the magnetized torque-transmitting element, and for determining the torque applied to the shaft via the driving unit based on the corrected magnetic field.

## Description

### Field of the Invention

The invention relates to an electric hand tool with a torque sensor.

### Prior Art

Torque adjustment for nuts or bolts in vehicles, such as to attach wheels, is may be done manually with a mechanical torque wrench by the workshop mechanics. The respective maximum torque is set via a mechanical slipping clutch or by pneumatic pressure.

Further, there are electric hand tools, such as impact wrenches, where the required torque can be preset. A particular type of such an electric hand tool may have a magnetostrictive/magnetoelastic torque measuring sensor, as described in EP 4 173 753 A1. A sensor based on the magnetoelastic principle often uses one or more coils for magnetic flux measurement. However, external magnetic fields can interfere with the measurement signal of the sensor. Such external magnetic fields may be due to the earth's magnetic field, strong currents, electromagnetic radiation, e.g. from nearby electric motors or magnetized components.

### Description of the Invention

It is the object of the present invention to overcome at least some of the above mentioned disadvantages.

This object is achieved by an electric hand tool according to claim 1.

The electric hand tool according to the invention, in particular an impact wrench or a screw driver or an electric drill, comprises a driving unit for driving a shaft of the electric hand tool and configured to drive, via the shaft, a socket of the electric hand tool or a socket connectable to the electric hand tool; a magnetostrictive torque sensor for measuring a torque applied to the shaft via the driving unit; wherein the magnetostrictive torque sensor comprises a magnetized torque-transmitting part, such as a magnetized portion of the shaft, and a 3D magnetic field sensor, in particular a magnetoresistive sensor, e.g. AMR (anisotropic magnetoresistance), TMR (tunnel magnetoresistance), CMR (colossal magnetoresistance), GMR (giant magnetoresistance) or EMR (extraordinary magnetoresistance) magnetic field sensor, wherein the 3D magnetic field sensor is configured for measuring a total magnetic field, the total magnetic field including the magnetic field generated by the magnetized torque-transmitting part and an interfering external magnetic field; and a processor for at least partially correcting the total magnetic field for the interfering external magnetic field to obtain a corrected magnetic field corresponding to the magnetic field generated by the magnetized torque-transmitting part, and for determining the torque applied to the shaft via the driving unit based on the corrected magnetic field.

Therefore, the measurement by the magnetostrictive torque sensor can be corrected for the interfering effect of external magnetic fields that are not due to the magnetized portion of the shaft. In particular, the effect of a magnetic field having a different direction than the magnetic field resulting from the magnetized shaft due to the magetostrictive effect may be compensated. Accordingly, the torque applied to the shaft can be determined more accurately.

According to a development, the torque may be due to a rotational force acting on the shaft via the driving unit and a counter rotational force acting on the shaft via the socket.

The external magnetic field may be measured by the 3D magnetic field sensor in a torque-free state of the shaft, wherein the counter rotational force acting on the shaft via the socket is zero. This has the advantage that no effect (magnetic field) from the magnetostrictive torque sensor is present, such that the external magnetic field can be separately determined. The shaft may be at rest or may be rotating at a constant rotational speed due to being driven by the electric motor.

In another development, the electric hand tool may further comprise an angular sensor for determining a rotational angle of the shaft.

The external magnetic field may be measured by the 3D magnetic field sensor depending on the rotational angle of the shaft determined by the angular sensor. This has the advantage that external magnetic fields from a rotationally non-symmetric source with respect to the shaft rotation can be determined. For example, a magnetized nut attached to the socket may be pre-magnetized in a manner that is not rotationally symmetric.

The electric hand tool may further comprise a memory in communication with the processor, wherein the memory may be configured for storing a relation between a 3D value of the external magnetic field and the rotational angle of the shaft, and wherein the processor may be configured for obtaining the interfering external magnetic field depending on the rotational angle, based on the stored relation.

In another development, the socket may be configured for receiving a fastening element such as a nut, bolt or screw.

In a further development, the external magnetic field may be generated by an electric current, electromagnetic radiation, e.g. from an electric motor, or by a magnetized component, in particular by at least one from the group of the socket, a tool or a fastening element connected to the socket, an electric motor of the electric hand tool, and a geomagnetic field.

This above-mentioned object is also achieved by a method according to claim 9.

The method for measuring a torque in an electric hand tool, in particular an impact wrench or a screw driver or an electric drill, comprises the steps of driving a shaft of the electric hand tool and driving, via the shaft, a socket of the electric hand tool or a socket connected to the electric hand tool; measuring a torque applied to the shaft via the driving unit using a magnetostrictive torque sensor; wherein the magnetostrictive torque sensor comprises a magnetized torque-transmitting part, such as a magnetized portion of the shaft, and a 3D magnetic field sensor, in particular a magnetoresistive sensor e.g., TMR, CMR, GMR, AMR or EMR magnetic field sensor; and by using the 3D magnetic field sensor, measuring a total magnetic field, the total magnetic field including the magnetic field generated by the magnetized torque-transmitting part and an interfering external magnetic field; and at least partially correcting the total magnetic field for the interfering external magnetic field to obtain a corrected magnetic field corresponding to the magnetic field generated by the magnetized torque-transmitting part, and determining the torque applied to the shaft via the driving unit based on the corrected magnetic field.

According to a development of the method according to the invention, the torque may be due to a rotational force acting on the shaft via the driving unit and a counter rotational force acting on the shaft via the socket, and the method may further comprise the step of measuring the external magnetic field by the 3D magnetic field sensor in a torque-free state of the shaft, wherein the counter rotational force acting on the shaft via the socket is zero.

In another development, the method may further comprise determining a rotational angle of the shaft, and measuring the external magnetic field by the 3D magnetic field sensor depending on the determined rotational angle of the shaft.

The method may further comprise the steps of storing a relation between a 3D value of the external magnetic field and the rotational angle of the shaft in a memory, and obtaining the interfering external magnetic field depending on the rotational angle, based on the stored relation.

In another development, the socket may receive a fastening element such as a nut, bolt or screw.

In a further development, the external magnetic field may be generated by an electric current, electromagnetic radiation, e.g. from an electric motor, or by a magnetized component, in particular by at least one from the group of the socket, a tool or a fastening element connected to the socket, an electric motor of the electric hand tool, and a geomagnetic field.

Further features and exemplary embodiments as well as advantages of the present invention will be explained in greater detail hereinafter by means of the drawings in the following. It is clear that the embodiments do not exhaust the field of the present invention. It is further clear that some or all of the features described in the following can also be combined with one another in a different way.

### Brief Description of the Drawings

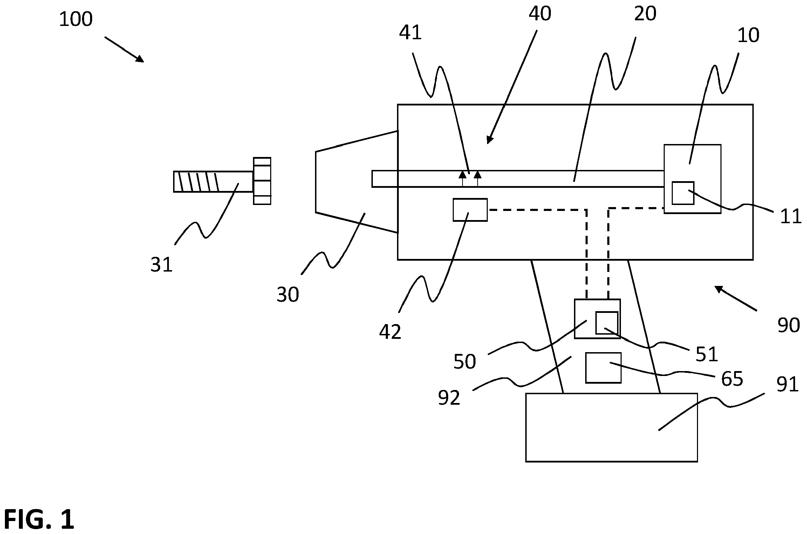

- Fig. 1: shows an embodiment of the electric hand tool according to the invention.

### Embodiments

If torque sensors, which measure on the basis of the magnetoelastic effect, are used in power tools / machine tools (e.g. impact wrenches), the external fields can cause measurement errors or make measurement impossible. Impact wrenches often use slip-on nuts or other slip-on tools that are pre-magnetized by the manufacturer. Further, these machines are often driven by powerful electric motors which, due to the high power consumption and currents involved, generate strong magnetic fields which are superimposed on the (desired) magnetic field caused by inverse magnetostriction.

A sensor based on the magnetoelastic principle often uses one or more coils for magnetic flux measurement. However, coils can only measure the value of the magnetic flux, but not the magnetic flux direction (no 3-D measurement).

An AMR, TMR, GMR, CMR, or EMR sensor (3-D resolution) can detect the magnetic flux direction. By using such a sensor instead of inductive coils, the field direction of the magnetic flux can be detected. Thus, it can be distinguished whether the signal was generated by the earth's magnetic field, by the magnetized component (for example, wrench socket, static or rotating) or by the applied torque in the shaft of the impact wrench (which is to be measured) due to the magnetoelastic effect. Thus, the invention relates to the use of a direction resolving element, such as an AMR sensor, especially for the use in machine tools in order to correct / compensate for errors due to external magnetic fields.

Fig. 1 shows an embodiment of the electric hand tool 100 according to the invention.

The electric hand tool 100 comprises a driving unit (electric motor) 10 for driving the shaft 20 of the electric hand tool 100 and the driving unit 10 is configured to drive, via the shaft 20, the socket 30 that is connectable to the electric hand tool 100. The electric hand tool 100 further has a magnetostrictive torque sensor 40 for measuring a torque applied to the shaft 20 via the driving unit 10; wherein the magnetostrictive torque sensor 40 comprises a magnetized portion 41 of the shaft 20 and an AMR, TMR, GMR, CMR or EMR magnetic field sensor 42, wherein the AMR, TMR, GMR, CMR or EMR magnetic field sensor 42 is configured for measuring a total magnetic field, the total magnetic field including the magnetic field generated by the magnetized portion of the shaft and an interfering external magnetic field. In addition, a processor 50 is provided for at least partially correcting the total magnetic field for the interfering external magnetic field to obtain a corrected magnetic field corresponding to the magnetic field generated by the magnetized portion 41 of the shaft 20, and for determining the torque applied to the shaft 20 via the driving unit 10 based on the corrected magnetic field.

The external magnetic field may be measured by the AMR, TMR, GMR, CMR or EMR magnetic field sensor 42 in a torque-free state of the shaft 20, wherein the counter rotational force acting on the shaft 20 via the socket 30 is zero. This has the consequence that no effect (magnetic field) from the magnetostrictive torque sensor is present, such that the external magnetic field can be separately determined. The shaft 20 may be at rest or may be rotating at a constant rotational speed due to being driven by the electric motor 10.

The electric hand tool 100 further comprise an angular sensor 11 for determining a rotational angle of the shaft 20. The external magnetic field may be measured by the AMR, TMR, GMR, CMR or EMR magnetic field sensor 42 depending on the rotational angle of the shaft determined by the angular sensor 11. Thereby external magnetic fields from a rotationally non-symmetric source with respect to the shaft rotation can be determined. For example, a magnetized nut attached to the socket 30 may be pre-magnetized in a manner that is not rotationally symmetric.

The electric hand tool 100 further comprises a memory 51 (volatile or permanent) in communication with the processor 50. The memory 51 stores a current relation between a 3D value of the external magnetic field and the rotational angle of the shaft 20, and the processor 50 may obtain the interfering external magnetic field depending on the rotational angle, based on the stored relation. The relation may depend on the orientation of the electric hand tool 100, for example when the effect of the geomagnetic field is compensated. Further, the relation may depend on the specific magnetized fastening element 31 or magnetized socket 30 being attached.

In this embodiment, the electric hand tool 100 has a rechargeable battery unit 91 attached to a housing 90 to supply the driving unit 10 with electrical energy. In this example, the battery unit 91 is attached to a hand grip 92 of the housing 90.

The socket 30 may receive a fastening element 31 such as a nut, bolt or screw that can be driven and fixed to an object. The processor 50 receives a measurement signal from the magnetostrictive torque sensor 40 and controls the driving unit 10 to adjust the applied torque value by increasing the torque until it is within a predefined tolerance range around a predetermined value that is used for a current fastening process. The predetermined value and/or the tolerance range is stored in a permanent memory 65 of the electric hand tool 100.

The torque sensor 40 is a magnetotrictive torque sensor and comprises a magnetized portion 41 of the shaft 20 and an AMR, TMR, GMR, CMR or EMR magnetic field sensor 42 for detecting a magnetic field change from the magnetized portion 41 external to the shaft 20.

The driven shaft is 20 magnetized and the AMR, TMR, GMR, CMR or EMR magnetic field sensor 42 is provided near the magnetized portion 41 to determine the magnetic field changes when a torque is applied, which torque results in a torsion of the shaft 20 and thereby generating the magnetic field change at the location of the magnetic field sensor due to the inverse magnetostrictive effect. The magnetization of the shaft 20 may be provided during manufacturing of the electric hand tool 100, and a calibration of the magnetic field sensor signal in relation to the applied torque may be stored in the permanent memory 65 of the electric hand tool 100.

Torque sensors based on the principle of the inverse magnetostrictive effect are described for example in EP 3 050 790 B1. A magnetized shaft (as a primary sensor part) generates a magnetic field outside the shaft as a function of an applied torque, which can be detected contactless by a magnetic field sensor (as a secondary sensor part). The magnetic field change is usually directly proportional to the applied torque. A corresponding one-time calibration is be performed during the manufacturing phase of the torque sensor to relate the magnetic field change to the applied torque.

Other magnetized torque-transmitting part on the basis of the inverse magnetostrictive effect are described in EP 4 116 688 A1 and may alternatively be used in the electric hand tool 100 instead of the magnetized portion 41 of the shaft 20. These torque sensors comprise a disc which comprises a magnetostrictive, premagnetized or magnetizable material; and a magnetic field sensor arrangement; wherein a torque acting about an axis of rotation of the disc can be applied to the disc and the magnetostrictive material is designed to generate a magnetic field outside the disc which varies as a function of the acting torque; wherein the magnetic field sensor arrangement is designed to output a signal on the basis of the magnetic field generated by the magnetostrictive material; and wherein the torque sensor is configured to determine a value of the acting torque on the basis of the output signal. A disk acting as a torque-transmitting part is used to measure the applied torque by pre-magnetizing at least a part of the disk. In particular, the disk may have spokes connecting the inner portion and the outer portion of the disk, and one or more spokes may be magnetized. In this way, the disk, rather than a shaft on which the disk may be placed, is used as the primary sensor.

The embodiments are only exemplary and the full scope of the present invention is defined by the claims.

## Claims

1. Electric hand tool, in particular an impact wrench or a screw driver or an electric drill, comprising:
a driving unit for driving a shaft of the electric hand tool and configured to drive, via the shaft, a socket of the electric hand tool or a socket connectable to the electric hand tool;
a magnetostrictive torque sensor for measuring a torque applied to the shaft via the driving unit; wherein the magnetostrictive torque sensor comprises a magnetized torque-transmitting part, such as a magnetized portion of the shaft, and a 3D magnetic field sensor, in particular an AMR, TMR, GMR, CMR or EMR magnetic field sensor, wherein the 3D magnetic field sensor is configured for measuring a total magnetic field, the total magnetic field including the magnetic field generated by the magnetized torque-transmitting part and an interfering external magnetic field; and
a processor for at least partially correcting the total magnetic field for the interfering external magnetic field to obtain a corrected magnetic field corresponding to the magnetic field generated by the magnetized torque-transmitting part, and for determining the torque applied to the shaft via the driving unit based on the corrected magnetic field.

2. Electric hand tool according to claim 1, wherein the torque is due to a rotational force acting on the shaft via the driving unit and a counter rotational force acting on the shaft via the socket.

3. Electric hand tool according to claim 2, wherein the external magnetic field is measured by the 3D magnetic field sensor in a torque-free state of the shaft, wherein the counter rotational force acting on the shaft via the socket is zero.

4. Electric hand tool according to any one of claims 1 to 3, further comprising an angular sensor for determining a rotational angle of the shaft.

5. Electric hand tool according to claim 4, wherein the external magnetic field is measured by the 3D magnetic field sensor depending on the rotational angle of the shaft determined by the angular sensor.

6. Electric hand tool according to claim 5, further comprising a memory in communication with the processor, wherein the memory is configured for storing a relation between a 3D value of the external magnetic field and the rotational angle of the shaft, and wherein the processor is configured for obtaining the interfering external magnetic field depending on the rotational angle, based on the stored relation.

7. Electric hand tool according to any one of claims 1 to 6, wherein the socket is configured for receiving a fastening element such as a nut, bolt or screw.

8. Electric hand tool according to any one of claims 1 to 7, wherein the external magnetic field is generated by an electric current, electromagnetic radiation, e.g. from an electric motor, or by a magnetized component, in particular by at least one from the group of the socket, a tool or a fastening element connected to the socket, an electric motor of the electric hand tool, and a geomagnetic field.

9. Method for measuring a torque in an electric hand tool, in particular an impact wrench or a screw driver or an electric drill, the method comprising:
driving a shaft of the electric hand tool and driving, via the shaft, a socket of the electric hand tool or a socket connected to the electric hand tool;
measuring a torque applied to the shaft via the driving unit using a magnetostrictive torque sensor; wherein the magnetostrictive torque sensor comprises a magnetized torque-transmitting part, such as a magnetized portion of the shaft, and a 3D magnetic field sensor, in particular an AMR, TMR, GMR, CMR or EMR magnetic field sensor; and by using the 3D magnetic field sensor, measuring a total magnetic field, the total magnetic field including the magnetic field generated by the magnetized torque-transmitting part and an interfering external magnetic field; and
at least partially correcting the total magnetic field for the interfering external magnetic field to obtain a corrected magnetic field corresponding to the magnetic field generated by the magnetized torque-transmitting part, and determining the torque applied to the shaft via the driving unit based on the corrected magnetic field.

10. The method of claim 9, wherein the torque is due to a rotational force acting on the shaft via the driving unit and a counter rotational force acting on the shaft via the socket, the method further comprising the step of measuring the external magnetic field by the 3D magnetic field sensor in a torque-free state of the shaft, wherein the counter rotational force acting on the shaft via the socket is zero.

11. The method of claim 9 or 10, further comprising determining a rotational angle of the shaft, and measuring the external magnetic field by the 3D magnetic field sensor depending on the determined rotational angle of the shaft.

12. The method of claim 11, further comprising storing a relation between a 3D value of the external magnetic field and the rotational angle of the shaft in a memory, and obtaining the interfering external magnetic field depending on the rotational angle, based on the stored relation.

13. The method of any one of claims 9 to 12, wherein the socket receives a fastening element such as a nut, bolt or screw.

14. The method of any one of claims 9 to 13, wherein the external magnetic field is generated by an electric current, electromagnetic radiation, e.g. from an electric motor, or by a magnetized component, in particular by at least one from the group of the socket, a tool or a fastening element connected to the socket, an electric motor of the electric hand tool, and a geomagnetic field.
